# EUROPÄISCHE PATENTSCHRIFT

(11) **EP 1 612 878 B1**
(45) Veröffentlichungstag und Bekanntmachung des Hinweises auf die Patenterteilung: **25.04.2007**
(21) Anmeldenummer: 04015502.0
(22) Anmeldetag: 01.07.2004
(51) Int. Cl.: H01M 8/04

(54) **Verfahren zum Betreiben einer Brennstoffzellenanlage und Brennstoffzellenanlage**
Method of operating a fuel cell system and a fuel cell system
Méthode d' actionner un système de piles à combustible et système de piles a combustible

(43) Veröffentlichungstag der Anmeldung: 04.01.2006
(73) Patentinhaber: SIEMENS AKTIENGESELLSCHAFT, 80333 München (DE)
(72) Erfinder: Bette, Willi, 91056 Erlangen (DE); Coerlin, Detlev, 91056 Erlangen (DE); Strühler, Walter, 96114 Hirschaid (DE); Voitlein, Ottmar, 91475 Lonnerstadt (DE)

(56) Entgegenhaltungen:
- DE-A- 10 334 405
- US-B1- 6 472 090
- US-B1- 6 558 824

## Beschreibung

Die Erfindung betrifft ein Verfahren zum Betreiben einer Brennstoffzellenanlage mit einem Brennstoffzellenstapel, insbesondere PEM Brennstoffzellenstapel, dem im Normalbetrieb anodenseitig ein Anodengas und kathodenseitig ein Kathodengas über Gaszuführungen zugeführt wird. Die Erfindung betriff weiterhin eine derartige Brennstoffzellenanlage.

Eine solche Brennstoffzellenanlage und ein Verfahren zum Betreiben einer Brennstoffzellenanlage sind beispielsweise aus der US 6,558,824 B1 zu entnehmen.

Beim Betrieb einer Brennstoffzellenanlage wird üblicherweise einem aus gestapelten Brennstoffzellen gebildeten Brennstoffzellenblock zur Erzeugung elektrischen Stroms anodenseitig ein Brenngas, beispielsweise Wasserstoff, und kathodenseitig Luft oder Sauerstoff als weiteres Reaktionsgas zugeführt. Es gibt mittlerweile eine Vielzahl von unterschiedlichen Arten von Brennstoffzellenanlagen, die sich im Hinblick auf ihren Aufbau und insbesondere im Hinblick auf die verwendeten Elektrolyte sowie im Hinblick auf die notwendige Betriebstemperatur unterscheiden. Bei einer sogenannten PEM-Brennstoffzelle (proton exchange membrane) ist zwischen einer gasdurchlässigen Anode und einer gasdurchlässigen Kathode eine Polymermembran angeordnet, die für Wasserstoffprotonen durchlässig ist. Da eine einzige Brennstoffzelle eine Spannung von lediglich etwa 0,7 bis 0,9 Volt liefert, sind mehrere Brennstoffzellen elektrisch in Serie zu einem Stapel miteinander verbunden. Die einzelnen Brennstoffzellen sind hierbei üblicherweise durch eine bipolare Platte voneinander getrennt. Die bipolare Platte weist hierbei i.d.R. eine Art Rillenstrüktur auf und liegt an der Anode bzw. an der Kathode an. Durch die Rillenstruktur ist ein Gasraum zwischen der bipolaren Platte und der Anode bzw. Kathode gebildet, durch den die Reaktionsgase strömen.

Beim Betrieb einer PEM-Brennstoffzelle wandern Wasserstoffprotonen durch den Elektrolyten auf die Sauerstoffseite und reagieren mit dem Sauerstoff. Dabei fällt als Reaktionsprodukt Reaktionswasser an. Neben dem Reaktionswasser erfolgt ein zusätzlicher Wassereintrag in den Gasraum aufgrund der üblicherweise vorgenommenen Befeuchtung der Reaktionsgase vor ihrem Eintritt in die Brennstoffzelle.

Im Laufe der Betriebsdauer der Brennstoffzelle kann es zu Einbußen im Hinblick auf den Wirkungsgrad dadurch kommen, dass sich Wasser in Poren des im Elektrolyten, also in der Polymermembran, einlagert und dadurch den Protonentransport von der Anodenseite zur Kathodenseite behindert. Zudem besteht die Gefahr, dass das Wasser den Gastransport durch die üblicherweise porösen oder diffusionsoffenen Kathode bzw. Anode zum Elektrolyten hin behindert.

Gemäß der US 6,558,824 B1 ist ein Vakuumsystem vorgesehen, mit dem zumindest auf einer Gasseite ein Vakuum erzeugt wird, um dadurch eventuell eingelagertes Wasser wieder zu entfernen. Hierzu sind die Gasräume, also der Anodengasraum einerseits und der Kathodengasraum andererseits, über spezielle Leitungen und einem Absperrventil mit einer Einrichtung zur Erzeugung des Vakuums verbunden.

Der Erfindung liegt die Aufgabe zugrunde, eine einfache Regeneration einer Brennstoffzelle zu ermöglichen.

Die Aufgabe wird erfindungsgemäß gelöst durch ein Verfahren zum Betreiben einer Brennstoffzelle gemäß Patentanspruch 1. Danach ist vorgesehen, dass zu Regenerationszwecken zumindest eine Gaszuführung unterbrochen und ein Anodenanschluss mit einem Kathodenanschluss der Brennstoffzelle elektrisch verbunden wird, und zwar derart, dass eine Druckdifferenz zwischen der Kathoden- und der Anodenseite erzeugt wird.

Dieser Ausgestaltung liegt die Idee zugrunde, durch einen "selektiven" Abbrand von Reaktionsgasen in der Brennstoffzelle zwischen den beiden Gasräumen der Brennstoffzelle einen Differenzdruck zu erzeugen, so dass in dem Elektrolyten und/oder in der porösen Kathode bzw. Anode enthaltenes Wasser aufgrund der Druckdifferenz ausgetrieben wird. Es wird also quasi durch Abbrennen eines der beiden Reaktionsgase in dem abgesperrten Gasraum ein Unterdruck erzeugt. Dies hat den entscheidenden Vorteil, dass zur Erzeugung des Unterdrucks bzw. des Vakuums keine zusätzliche aufwändige Apparatur zur Erzeugung des Unterdrucks notwendig ist. Vielmehr wird auf die üblichen Prozesse und Reaktionen bei einer Brennstoffzelle zurückgegriffen.

Gemäß einer besonders bevorzugten Ausgestaltung wird hierbei die Anode mit der Kathode kurzgeschlossen. Aufgrund des Kurzschlusses werden die Reaktionsgase schlagartig abgebrannt. Durch diese Maßnahme wird im Bereich von einigen 10 msec die Druckdifferenz aufgebaut, so dass ein Druckstoß erfolgt. Diese abrupte Druckänderung führt zu einem effektiven Ausstoßen von eventuellen Wasserteilen, die sich in den Poren des Elektrolyten befinden. Ein positiver Nebeneffekt bei der Kurzschlussverbindung besteht darin, dass aufgrund eines sehr hohen Kurzschlussstroms zugleich die Temperatur deutlich ansteigt, so dass eventuell vorhandenes Wasser verdampft und damit leichter aus den Poren herausgedrückt wird. Bei einer Kurzschlussverbindung fließt hierbei vorzugsweise ein Strom in der Größenordnung von mehreren tausend Ampere.

Aufgrund des sehr raschen Druckaufbaus ist gemäß einer zweckdienlichen Weiterbildung vorgesehen, dass der Anodenanschluss lediglich für eine sehr kurze Zeitdauer < 0,1 Sekunden, insbesondere für etwa 40 - 50 Msec, mit dem Kathodenanschluss kurzgeschlossen wird. Der Normalbetrieb der Brenstoffzelle wird daher nahezu nicht gestört.

Gemäß einer zweckdienlichen Weiterbildung werden durch die Wahl, welche Gaszuführung unterbrochen wird, unterschiedliche Druckdifferenzen eingestellt. Insbesondere besteht hierbei die Möglichkeit, gezielt die eine bzw. die andere Gasseite abzusperren und dadurch den Unterdruck gezielt auf der einen oder anderen Gasseite einzustellen. In besonders wirkungsvoller und bevorzugter Weise erfolgt die Absperrung so, dass zunächst auf der einen Gasseite und anschließend auf der anderen Gasseite ein Unterdruck erzeugt wird, um eventuell verstopfte Poren zu beiden Seiten hin insbesondere auch mehrfach zu reinigen.

Gemäß bevorzugten Weiterbildungen ist daher vorgesehen, dass gemäß einer ersten Variante beide Gaszuführungen unterbrochen werden. Bei der Verwendung von Wasserstoff und Sauerstoff als Reaktionsgase stellt sich in diesem Fall eine Druckdifferenz von etwa 1,25 x 10⁵ Pa (1,25 bar) ein, wobei der Druck auf der Sauerstoffseite größer als der auf der Wasserstoffseite ist.

Alternativ hierzu wird zweckdienlicherweise lediglich die kathodenseitige Gaszuführung unterbrochen. Bei Verwendung von Wasserstoff und Sauerstoff als Reaktionsgase führt dies zu einer Druckdifferenz von etwa 1,9 x 10⁵Pa (1,9 bar), wobei hier auf der Wasserstoffseite ein höherer Druck vorliegt und der Unterdruck auf der Sauerstoffseite herrscht.

Gemäß einer bevorzugten dritten Alternative wird die anodengasseitige Gaszuführung unterbrochen, so dass der Unterdruck auf der Wasserstoffseite entsteht. Hierbei bildet sich eine Druckdifferenz von 2,2 x 10⁵ Pa (2,2 bar) ein.

Gemäß einer zweckdienlichen Weiterbildung wird die zweite Gaszuführung im Vergleich zur ersten Gaszuführung zeitversetzt unterbrochen. Wird also zunächst die sauerstoffseitige Gaszuführung unterbrochen, so wird die wasserstoffseitige Gaszuführung zeitversetzt unterbrochen. Bei der KurzschlussVerbindung zwischen Anode und Kathode liegt dieser Zeitversatz vorzugsweise im msec-Bereich, insbesondere etwa zwischen 10 und 40 Millissekunden. Da durch das zeitversetzte Schließen über eine gewisse Zeitdauer hinweg der zweite Gasraum noch mit Frischgas versorgt wird, stellt sich eine Druckdifferenz ein, die abhängt von der Dauer des Zeitversatzes. Denn die maximale Druckdifferenz wird erreicht, wenn die zweite Gaszuführung permanent offen bleibt. Durch die zeitversetzte Absperrung lässt sich daher die Druckdifferenz auf einen nahezu beliebigen Wert einstellen.

Um einen effektiven Druckaufbau zu erreichen, ist gemäß einer zweckdienlichen Weiterbildung vorgesehen, dass der jeweilige Gasraum sowohl eingangs- als auch ausgangsseitig abgesperrt wird. Üblicherweise schließt sich an den jeweiligen Gasraum eine Restgasleitung an zur Abführung der unverbrauchten Restgase, beispielsweise an einen nachfolgenden Brennstoffzellenstapel. In diesem Fall wird die Restgasleitung durch ein der Brennstoffzelle / dem Brennstoffzellstapel vorzugsweise unmittelbar nachgeordnetes Restgasventil in der Restgasleitung abgesperrt. Dies verhindert, dass über die Restgasleitung aufgrund der Erzeugung des Unterdrucks aus nachfolgenden Brennstoffzellen oder Brennstoffzellenstapeln Gas angesaugt wird.

Gemäß einer bevorzugten Weiterbildung ist der Brennstoffzellenstapel im Normalbetrieb mit einer elektrischen oder elektronischen Last verbunden. Zur Regeneration wird diese Verbindung mit der Last zweckdienlicherweise unterbrochen, bevor die Anode mit der Kathode elektrisch verbunden, insbesondere kurzgeschlossen wird.

Zweckdienlicherweise werden diese Maßnahmen zur Regeneration der Brennstoffzelle während des Normalbetriebs der Brennstoffzellenanlage vorgenommen werden. Die Stromerzeugung durch die Anlage läuft daher weitgehend unterbrechungsfrei und ist - nicht zuletzt aufgrund der kurzen Zeitdauern, während der der Kathodenanschluss mit dem Anodenanschluss elektrisch verbunden wird - unbeeinflußt von der Regeneration. Dies wird durch eine geeignete Steuerung der Maßnahmen zur Regeneration einerseits und des Normalbetriebs zur Stromerzeugung andererseits erzielt.

Die Aufgabe wird gemäß der Erfindung weiterhin gelöst durch eine Brennstoffzellenanlage gemäß Patentanspruch 11. Die im Hinblick auf das Verfahren angeführten Vorteile und bevorzugten Ausgestaltungen sind sinngemäß auch auf die Brennstoffzellenanlage zu übertragen.

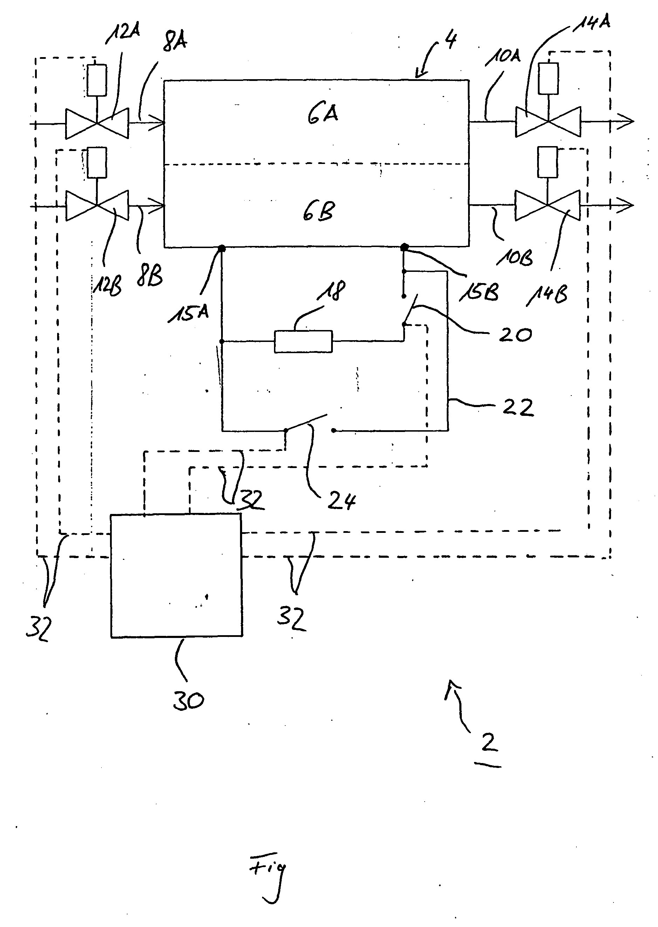

Ein Ausführungsbeispiel der Erfindung wird im Folgenden anhand der Zeichnung näher erläutert. Diese zeigt ein stark vereinfachtes und schematisches Blockschaltbild einer Brennstoffzellenanlage.

Eine Brennstoffzellenanlage 2 gemäß der Figur umfasst einen Brennstoffzellenstapel 4, der aus mehreren einzelnen Brennstoffzellen gebildet ist. Ein derartiger Brennstoffzellenstapel 4 wird auch als Brennstoffzellenmodul bezeichnet. In einer Brennstoffzellenanlage 2 können mehrere derartige Brennstoffzellenstapel 4 miteinander beispielsweise kaskadenartig verbunden sein.

Dem Brennstoffzellenstapel 4 und damit den einzelnen Brennstoffzellen sind jeweils ein Anodengasraum 6A sowie ein Kathodengasraum 6B zugeordnet. Als Anodengas wird vorzugsweise Wasserstoff und als Kathodengas vorzugsweise Sauerstoff verwendet. Die beiden Gasräume 6A,6B sind gaseingangsseitig jeweils mit einer Gaszuführungen 8A,B und gasausgangsseitig mit einer Restgasleitung 10A,B verbunden. In der Gaszuführung 8A,8B ist jeweils ein Gasventil 12A,B und in den Restgasleitungen 10A,B jeweils ein Restgasventil 14A,B vorgesehen.

Die mehreren Brennstoffzellen des Brennstoffzellenstapels 4 sind üblicherweise in Serie miteinander verschaltet, so dass sich eine resultierende Gesamtspannung ergibt, die über elektrische Anschlüsse, einem Anodenanschluss 15A und einem Kathodenanschluss 15B abgegriffen wird. Über einen Stromkreis ist eine Last 18 angeschlossen. Diese ist mit Hilfe eines ersten Schalters 20 zu- und abschaltbar. Weiterhin ist eine Kurzschlussleitung 22 vorgesehen, die über einen zweiten Schalter 24 geschlossen oder geöffnet werden kann.
Die Brennstoffzellenanlage 2 umfasst weiterhin eine Steuereinheit 30, die über Steuerleitungen 32 jeweils mit den Gasventilen 12A,B, den Restgasventilen 14A,B sowie den beiden Schaltern 20,24 verbunden ist und entsprechende Steuersignale im Bedarfsfall an diese Einheiten übermittelt, um diese Einheiten zu bedienen, also um sie zu schließen oder zu öffnen.

Bei der Brennstoffzellenanlage 2 werden insbesondere so genannte PEM-Brennstoffzellen (proton exchange membrane) verwendet. Diese werden üblicherweise bei einer Temperatur von etwa 70°C betrieben. Als Elektrolyt weisen diese Zellen eine Polymermembran auf, welche insbesondere für Wasserstoffprotonen durchlässig ist. Beim Betrieb der Brennstoffzellenanlage 4 mit Wasserstoff und Sauerstoff wandern die Wasserstoffprotonen durch die Polymermembran auf die Sauerstoffseite und reagieren dort mit dem Sauerstoff zu Wasser. Ein zusätzlicher Wassereintrag in die Gasräume 6A, 6B erfolgt dadurch, dass die Reaktionsgase vor ihrem Eintritt in den Brennstoffzellenstapel 4 in der Regel angefeuchtet werden.

Das in den Gasräumen, insbesondere im Kathodengasraum 6B entstehende Reaktionswasser wird üblicherweise durch einen Spülvorgang, d.h. durch gezieltes Öffnen des oder der Restgasventile 14A,B ausgespült.

Im Laufe der Betriebszeit besteht aber dennoch die Gefahr, dass der Wirkungsgrad der einzelnen Brennstoffzellen und damit des gesamten Brennstoffzellenstapels 4 nachlässt. Das Nachlassen des Wirkungsgrads beruht insbesondere darauf, dass Wasser in Poren der Polymermembran oder auch in Poren der gasdurchlässigen Kathode bzw. Anode eindringt und somit die Protonenwanderung von der Anoden- zur Kathodenseite bzw. den Gasaustausch zum Elektrolyten hin beeinträchtigt.

Um eine derartige Verstopfung von Poren aufzuheben und damit die Brennstoffzelle und insbesondere den Brennstoffzellenstapel 4 wieder zu regenerieren, ist vorgesehen, dass zumindest eine der Gaszuführungen 8A,B unterbrochen wird, und dass gleichzeitig der Anodenanschluss 15A mit dem Kathodenanschluss 15B verbunden wird. Durch diese Maßnahme wird das in dem jeweiligen Gasraum 6A, 6B befindliche Gas "abgebrannt" und verbraucht, so dass der Partialdruck selektiv in einem der Gasräume 6A,6B sinkt und eine Druckdifferenz zwischen den beiden Gasräumen 6A,6B aufgebaut wird. Durch diese Druckdifferenz wird eine eventuelle Verstopfung von Poren aufgelöst.

Eine besonders effiziente Reinigung wird dann erzielt, wenn die beiden Anschlüsse 15A,B über die Kurzschlussleitung 22 miteinander kurzgeschlossen werden. In diesem Fall fließen Ströme von bis zu mehreren tausend Ampere. Das Gas in dem jeweiligen Gasraum 6A, 6B wird dadurch in kürzester Zeit verbraucht, so dass sich schlagartig eine Druckdifferenz aufbaut. Auf die verstopften Poren wird quasi ein Druckstoß ausgeübt wird, welcher für eine effiziente Reinigung der verstopften Poren sorgt. Gleichzeitig wird der Elektrolyt durch den hohen Strom deutlich erwärmt, so dass eventuell eingelagertes Wasser verdampft, wodurch die Reinigungswirkung zusätzlich erhöht wird.

Durch die Wahl, welches der beiden Gasventile 12A,B verschlossen wird und insbesondere auch durch ein Schließen beider Gasventile 12A,B in definierter zeitlicher Abfolge kann die sich ausbildende Druckdifferenz zwischen den beiden Gasräumen 6A,B über einen weiten Bereich eingestellt werden. Für einen effizienten Druckaufbau werden zweckdienlicherweise das jeweilige Gasventil 12 A,B und das dem jeweiligen Reaktionsgas zugeordnete Restgasventil jeweils gleichzeitig paarweise verschlossen.

Zur Durchführung der Reinigung oder Regeneration bieten sich insbesondere folgende drei Betriebsweisen an. Zu deren Erläuterung wir im Ausführungsbeispiel hierbei von einer PEM-Brennstoffzelle ausgegangen, die einer Betriebstemperatur von etwa 76°C und mit einem Wasserdampfpartialdruck von etwa 0,4 X 10⁵ Pa betrieben wird. Weiterhin wird im Normalbetrieb von einem Druck auf der Wasserstoffseite von 2,3 x 10⁵ Pa und einem Druck auf der Sauerstoffseite von 2,6 x 10⁵ Pa ausgegangen. Der Partialdruck für Wasserstoff bzw. für Sauerstoff liegt hierbei aufgrund des Wasserdampfpartialdrucks jeweils um 0,4 x 10⁵ Pa darunter.
A) gleichzeitiges Schließen aller Ventile 12A,B; 14A,B:
   Auf der Wasserstoffseite stellt sich ein Restdruck in Höhe des Wasserdampfpartialdrucks von 0,4 x 10⁵ Pa ein. Auf der Sauerstoffseite stellt sich ein Restdruck von (2,6 - 1,9/2 = 1,65) x 10⁵ Pa (entsprechend der Stöchiometrie für das gebildete Reaktionswasser) ein. Es stellt sich in diesem Fall also ein Unterdruck auf der Wasserstoffseite von Δ P = 1,25 x 10⁵ Pa ein.
B) Es wird lediglich auf der Wasserstoffseite der Wasserstoff-Gasraum 6A abgesperrt. Auf der Wasserstoffseite stellt sich daher wiederum der Druck in Höhe des Wasserdampfpartialdrucks von 0,4 x 10⁵ Pa ein. Der Druck auf der Sauerstoffseite bleibt unverändert bei 2,6 x 10⁵ Pa. Es stellt sich also eine Druckdifferenz von ΔP = 2,2 x 10⁵ Pa ein, wobei hier wiederum auf der Wasserstoffseite der Unterdruck herrscht.
C) Absperren lediglich des Sauerstoff-Gasraums 6B:
   Auf der Sauerstoffseite stellt sich nunmehr der Unterdruck bzw. das Vakuum in Höhe des Wasserdampfpartialdrucks von 0,4 x 10⁵ Pa ein. Der Druck auf der Wasserstoffseite bleibt bei 2,3 10⁵ Pa bestehen, es ergibt sich eine Druckdifferenz von ΔP = 1,9 bar.

Diese drei prinzipiellen Verfahrensvarianten sind auch dahingehend kombinierbar, dass die einzelnen Ventile 12A, B; 14A,B auf der Sauerstoffseite und der Wasserstoffseite zeitversetzt zueinander geschlossen werden, wodurch der sich einstellende Differenzdruck gezielt eingestellt werden kann.

Bei allen Verfahrensvarianten werden nach Absperren der jeweiligen Ventile die beiden Anschlüsse 15A,B über die Kurzschlussleitung 22 durch Schließen des zweiten Schalters 24 miteinander kurzgeschlossen. Zuvor wird vorzugsweise die Last 18 durch Öffnen des ersten Schalters 20 abgeschalten.

Aufgrund des bei einem Kurzschluss abrupten "Abbrands" des Reaktionsgases in dem jeweiligen abgeschlossenen Gasraum 6A,B wird der Kurzschluss lediglich über einen begrenzten Zeitraum im Bereich von etwa bis zu 50 msec aufrecht erhalten. Diese sehr kurze Zeit ist ausreichend für eine effektive Reinigung von verstopften Poren.

Der besondere Vorteil des hier beschriebenen Verfahrens ist unter anderem darin zu sehen, dass zur Regeneration und zum Reinigung der Poren keine aufwändigen Vakuumleitungen oder Vakuumgeräte erforderlich sind.

Von besonderer Bedeutung ist weiterhin, dass die Maßnahmen zur Regeneration während des Normalbetriebs der Brennstoffzellenanlage erfolgt, so dass ein unterbrechungsfreier Betrieb möglich ist.

## Patentansprüche

1. Verfahren zum Betreiben einer Brennstoffzellenanlage (2) mit einem Brennstoffzellenstapel (4), insbesondere PEM-Brennstoffzellenstapel, dem im Normalbetrieb anodenseitig ein Anodengas und kathodenseitig ein Kathodengas über Gaszuführungen (6A,B) zugeführt wird,
**dadurch gekennzeichnet, dass** zu Regenerationszwecken zumindest eine Gaszuführung (6A,B) unterbrochen und ein Anodenanschluss (15A) mit einem Kathodenanschluss (15B) elektrisch verbunden wird, so dass eine Druckdifferenz zwischen der Kathoden- und der Anodenseite erzeugt wird.

2. Verfahren nach Anspruch 1,
**dadurch gekennzeichnet, dass** der Anodenanschluss (15A) mit dem Kathodenanschluss (15B) kurzgeschlossen wird.

3. Verfahren nach Anspruch 1 oder 2,
**dadurch gekennzeichnet, dass** der Anodenanschluss (15A) mit dem Kathodenanschluss (15B) für eine Zeitdauer <0,1 sec, insbesondere für etwa 40-50 msec, kurzgeschlossen wird.

4. Verfahren nach einem der vorhergehenden Ansprüche,
**dadurch gekennzeichnet, dass** durch die Wahl, welche der Gaszuführung (6A,B) unterbrochen wird, unterschiedliche Druckdifferenzen eingestellt werden.

5. Verfahren nach einem der vorhergehenden Ansprüche,
**dadurch gekennzeichnet, dass** beide Gaszuführungen (6A,B) unterbrochen werden.

6. Verfahren nach einem der Ansprüche 1 bis 4,
**dadurch gekennzeichnet, dass** die kathodenseitige Gaszuführung (6B) unterbrochen wird.

7. Verfahren nach einem der Ansprüche 1 bis 4,
**dadurch gekennzeichnet, dass** die anodenseitige Gaszuführung (6A) unterbrochen wird.

8. Verfahren nach Anspruch 6 oder 7,
**dadurch gekennzeichnet, dass** die zweite Gaszuführung (6A;6B)zeitversetzt unterbrochen wird

9. Verfahren nach einem der vorhergehenden Ansprüche,
**dadurch gekennzeichnet, dass** sich an den Brennstoffzellenstapel (4) gasausgangsseitig eine jeweilige Restgasleitung (10A,B) für ein jeweiliges Restgas anschließt, wobei zusammen mit dem Unterbrechen der jeweiligen Gaszuführung (6A,B) zugleich auch die zugehörige Restgasleitung (10A,B) verschlossen wird.

10. Verfahren nach einem der vorhergehenden Ansprüche,
**dadurch gekennzeichnet, dass** der Brennstoffzellenstapel (4) im Normalbetrieb mit einer e-lektrischen/elektronischen Last (18) verbunden ist, und dass die Verbindung mit der Last (18) unterbrochen wird, bevor der Anodenanschluss (15A) mit dem Kathodenanschluss (15B) kurzgeschlossen wird.

11. Verfahren nach einem der vorhergehenden Ansprüche,
**dadurch gekennzeichnet, dass** die vorgenannten Maßnahmen während des Normalbetriebs der Brennstoffzellenanlage (2) zur Stromerzeugung ausgeführt werden.

12. Brennstoffzellenanlage (2) mit einem Brennstoffzellenstapel (4), insbesondere PEM-Brennstoffzellenstapel, der gaseingangsseitig an eine anodenseitige Gaszuführung (8A)sowie an eine kathodenseitige Gaszuführung(8B) mit jeweils einem Gasventil (12A,B)angeschlossen ist,
**dadurch gekennzeichnet, dass** eine Steuereinheit (30) vorgesehen ist, die derart ausgebildet ist, dass zu Regenerationszwecken zumindest ein Gasventil (12A,B) geschlossen wird und dass eine elektrische Verbindung, insbesondere eine Kurzschlussver bindung, zwischen einem Anodenanschluss (15A) und einem Kathodenanschluss (15B) ausgebildet wird, so dass eine Druckdifferenz zwischen der Kathoden- und der Anodenseite erzeugt wird.

## Claims

1. Method for operation of a fuel cell installation (2) having a fuel cell stack (4), in particular a PEM fuel cell stack to which, during normal operation, an anode gas is supplied on the anode side and a cathode gas is supplied on the cathode side, via gas supplies (6A, B),
**characterized in that**,
for regeneration purposes, at least one gas supply (6A, B) is interrupted and an anode connection (15A) is electrically connected to a cathode connection (15B) so that a pressure difference is produced between the cathode side and the anode side.

2. Method according to Claim 1,
**characterized in that**
the anode connection (15A) is shorted to the cathode connection (15B).

3. Method according to Claim 1 or 2,
**characterized in that**
the anode connection (15A) is shorted to the cathode connection (15B) for a time period of less than 0.1s, in particular for approximately 40-50 ms.

4. Method according to one of the preceding claims,
**characterized in that**
different pressure differences are selected by choosing which of the gas supplies (6A, B) is interrupted.

5. Method according to one of the preceding claims,
**characterized in that**
both gas supplies (6A, B) are interrupted.

6. Method according to one of Claims 1 to 4,
**characterized in that**
the cathode-side gas supply (6B) is interrupted.

7. Method according to one of Claims 1 to 4,
**characterized in that**
the anode-side gas supply (6A) is interrupted.

8. Method according to Claim 6 or 7,
**characterized in that**
the second gas supply (6A; 6B) is interrupted with a time offset.

9. Method according to one of the preceding claims,
**characterized in that**
a respective residual gas line (10A, B) for a respective residual gas is connected on the gas output side to the fuel cell stack (4) with the associated residual gas line (10A, B) also being closed at the same time together with the interruption of the respective gas supply (6A, B).

10. Method according to one of the preceding claims,
**characterized in that**
the fuel cell stack (4) is connected to an electrical/electronic load (18) during normal operation, and **in that** the connection to the load (18) is interrupted before the anode connection (15A) is shorted to the cathode connection (15B).

11. Method according to one of the preceding claims,
**characterized in that** the above-mentioned measures are carried out during normal operation of the fuel cell installation (2) for electricity generation.

12. Fuel cell installation (2) having a fuel cell stack (4), in particular a PEM fuel cell stack, which is connected on the gas input side to an anode-side gas supply (8A) as well as to a cathode-side gas supply (8B), each having a respective gas valve (12A, B),
**characterized in that**
a control unit (30) is provided and is designed in such a manner that at least one gas valve (12A, B) is closed for regeneration purposes, and in such a manner that an electrical connection, in particular a short-circuit connection, is formed between an anode connection (15A) and a cathode connection (15B), so that a pressure difference is produced between the cathode side and the anode side.

## Revendications

1. Procédé pour faire fonctionner une installation (2) de piles à combustible, comprenant un empilement (4) de piles à combustible, notamment un empilement de piles à combustible PEM, auquel est apporté, en fonctionnement normal, par des apports (6A, B) de gaz du côté de l'anode un gaz d'anode et du côté de la cathode un gaz de cathode,
**caractérisé en ce qu'**à des fins de régénération au moins un apport (6A, B) de gaz est interrompu et une borne (15A) d'anode est reliée électriquement à une borne (15B) de cathode, de manière à produire une différence de pression entre le côté de la cathode et le côté de l'anode.

2. Procédé suivant la revendication 1,
**caractérisé en ce que** la borne (15A) d'anode est court-circuitée avec la borne (15B) de cathode.

3. Procédé suivant la revendication 1 ou 2,
**caractérisé en ce que** la borne (15A) d'anode est court-circuitée avec la borne (15B) de cathode pendant une durée <0,1 seconde, notamment pendant environ 40 à 50 millisecondes.

4. Procédé suivant l'une des revendications précédentes,
**caractérisé en ce que** des différences de pression différentes sont réglées en choisissant celui des apports (6A, B) de gaz qui est interrompu.

5. Procédé suivant l'une des revendications précédentes,
**caractérisé en ce que** l'on interrompt les deux apports (6A, B) de gaz.

6. Procédé suivant l'une des revendications 1 à 4,
**caractérisé en ce que** l'on interrompt l'apport (6B) de gaz du côté de la cathode.

7. Procédé suivant l'une des revendications 1 à 4,
**caractérisé en ce que** l'on interrompt l'apport (6A) de gaz du côté de l'anode.

8. Procédé suivant la revendication 6 ou 7,
**caractérisé en ce que** l'on interrompt de façon décalée dans le temps le deuxième apport (6A, 6B) de gaz.

9. Procédé suivant l'une des revendications précédentes,
**caractérisé en ce qu'**à l'empilement (4) de piles à combustible se raccorde, du côté de la sortie du gaz, un conduit (10A, B) respectif pour du gaz restant, le conduit (10A, B) associé pour du gaz restant étant fermé aussi en même temps que l'on interrompt l'apport (6A, B) du gaz respectif.

10. Procédé suivant l'une des revendications précédentes,
**caractérisé en ce que** l'empilement (4) de piles à combustible est relié en fonctionnement normal à une charge (18) électrique/électronique et **en ce que** la liaison avec la charge (18) est interrompue avant que la borne (15A) de l'anode soit court-circuitée avec la borne (15B) de la cathode.

11. Procédé suivant l'une des revendications précédentes,
**caractérisé en ce que** les mesures mentionnées ci-dessus sont réalisées pendant le fonctionnement normal de l'installation (2) de piles à combustible pour produire du courant.

12. Installation (2) de piles à combustible comprenant un empilement (4) de piles à combustible, notamment un empilement de piles à combustible PEM, qui est raccordé du côté de l'entrée du gaz à un apport (8A) de gaz du côté de l'anode ainsi qu'à un apport (8B) de gaz du côté de la cathode ayant, respectivement, une vanne (12A, B) pour du gaz, **caractérisée en ce qu'**il est prévu une unité (30) de commande qui est conçue de façon à ce qu'à des fins de régénération, au moins une vanne (12A, B) pour du gaz soit fermée et à ce qu'une liaison électrique, notamment un court-circuit, soit formée entre une borne (15A) de l'anode et une borne (15B) de la cathode, de façon à produire une différence de pression entre le côté de la cathode et le côté de l'anode.
